# EUROPÄISCHE PATENTSCHRIFT

(11) **EP 0 931 226 B1**
(45) Veröffentlichungstag und Bekanntmachung des Hinweises auf die Patenterteilung: **21.07.2004**
(21) Anmeldenummer: 98949867.0
(22) Anmeldetag: 08.08.1998
(51) Int. Cl.: F16D 69/02

(54) **VERBUNDWERKSTOFF MIT HOHEM ANTEIL INTERMETALLISCHER PHASEN, VORZUGSWEISE FÜR REIBKÖRPER**
COMPOSITE MATERIAL WITH A HIGH PROPORTION OF INTERMETALLIC PHASES, PREFERABLY FOR FRICTION BODIES
MATERIAU COMPOSITE A FORTE PROPORTION DE PHASES INTERMETALLIQUES, DE PREFERENCE POUR CORPS DE FRICTION

(30) Priorität: 14.08.1997 DE 19735217
(43) Veröffentlichungstag der Anmeldung: 28.07.1999
(73) Patentinhaber: Schwäbische Hüttenwerke GmbH, D-73433 Aalen-Wasseralfingen (DE)
(72) Erfinder: LAAG, Rainhard, D-73441 Bopfingen (DE); SCHWARZ, Günther, D-78532 Tuttlingen (DE); HEINRITZ, Manfred, D-73431 Aalen (DE)
(74) Vertreter: Zirkel, Herbert
(86) Internationale Anmeldenummer: PCT/DE1998/002280
(87) Internationale Veröffentlichungsnummer: WO 1999/009334

(56) Entgegenhaltungen:
- EP-A- 0 695 811
- DE-A- 2 018 288
- DE-A- 2 137 343
- DE-A- 2 440 675
- FR-A- 2 322 935
- PATENT ABSTRACTS OF JAPAN vol. 018, no. 242 (C-1197), 10. Mai 1994 & JP 06 025800 A (DAIDO STEEL CO LTD), 1. Februar 1994

## Beschreibung

Die vorliegende Erfindung betrifft einen metallischen Gußwerkstoff für Reibkörper gemäß den Merkmalen in Anspruch 1, einen Reibkörper zur Momentenübertragung in Beschleunigungs- oder Verzögerungseinrichtungen gemäß den Merkmalen in den Ansprüchen 7 und 8 und ein Verfahren zur Herstellung eines metallischen Gußwerkstoffs für Reibkörper gemäß den Merkmalen in Anspruch 12.

Aufgabe der Erfindung ist es, einen Eisenwerkstoff für Reibkörper zu schaffen, der die bekannten Vorteile bisheriger Gußwerkstoffe, wie Hitzebeständigkeit, geringe Brandrißgefahr, akustische Dämpfung und dosierte Schmierung, aufweist sowie von geringer Dichte, weniger korrosionsgefährdet und, bei höherer Härte, besser bearbeitbar ist als Werkstoffe, die nach dem Stand der Technik hergestellt werden. Die Eigenschaften, die ein solcher Werkstoff haben muß, um die Maßnahmen, die zu seiner Erzeugung erforderlich sind, ergeben sich aus den kennzeichnenden Bestandteilen der Ansprüche.

Werkstoffe der erfindungsgemäßen Art eignen sich insbesondere für die Anwendung in Bremsscheiben, Bremstrommeln oder Kupplungsscheiben in land- oder schienengebundenen Verkehrssystemen, sind aber generell überall dort einsetzbar, wo für Beschleunigungs- oder Verzögerungsvorgänge eine Kraftübertragung zwischen 2 Körpern gewünscht wird, von denen mindestens einer eine translatorische oder rotatorische Bewegung relativ zum anderen Körper ausführt. Die Reibungskoeffizienten zwischen beiden Reibflächen sind je nach Konstruktion konstant oder veränderlich.

In Bremsen für land- oder schienengebundene Verkehrssysteme werden Trommelbremsen, Lamellenbremsen oder Scheibenbremsen verwendet. Die in Scheibenbremsen verwendeten Scheiben sind massiv oder innenbelüftet, entsprechend der Wärmebelastung. Verwendet werden zu ihrer Herstellung überwiegend nach DIN 15437 Gußeisen mit Lamellengraphit (z.B. GG 25) oder Kugelgraphit (z.B. GGG 40, GGG 50 oder GGG 60), Stahlguß GS 60, Baustahl St52-3, seltener auch Vergütungsstähle C 45 oder 42CrMo4. Als besonders vorteilhaft hat sich die Verwendung von Grauguß mit lamellarem Graphit (GG 25) erwiesen. Die dort vorliegende gestreckte Form des Graphits erzeugt die gewünschte hohe Wärmeleitfähigkeit. Der für die Bildung von Graphit erforderliche freie Kohlenstoff wird durch das Legieren des Roheisens mit Silizium erzeugt. Dabei sind möglichst geringe Gehalte von Silizium anzustreben, da Silizium die Wärmeleitfähigkeit von Eisen wiederum verringert. Besonders bewährt haben sich sonst unlegierte, hochgekohlte Gußeisenwerkstoffe. Das Versagen von Bremsscheiben durch Brandrisse und Maßänderungen durch Verzug sind bei unlegiertem Gußeisen geringer als bei niedriglegiertem oder bei Stahlguß. Auch das Bremsverhalten ist gleich oder besser. Der Verschleiß ist trotz geringer Härte niedriger, die Bremsscheiben neigen weniger zum Dröhnen und Rubbeln. Die Wärmeleitfähigkeit für einen z. B. aus GG 25 abgeleiteten GG 15 HC ist kleiner 50W/mK. Dieser kostengünstige Werkstoff ist zusätzlich gut zerspanbar.

Häufig wird für Bremsscheiben der Werkstoff GG 20 verwendet. Dessen chemische Zusammensetzung zeigt die nachfolgende Tabelle 1.

| Element | Fe | C | Si | Mn | P | S | Cu |
|---|---|---|---|---|---|---|---|
| Gew.-% | Rest | 3,6 | 2,0 | 0,7 | 0,01 | 0,1 | 0,3 |

Ein geringer Gehalt an Mo, Cr und Ni kann zulegiert werden, um die Festigkeit zu steigern und den Perlit zu stabilisieren. GG 20 weist nach DIN 1690 eine Zugfestigkeit von 200 bis 300 N/qmm auf, womit die für die Verwendung gewünschte Zugfestigkeit von mind. 150 N/qmm überschritten wird. Die Brinellhärte des Werkstoffs liegt bei 180 bis 220 HB.

Nachteilig ist aber bei allen bisher bekannten Graugußwerkstoffen für Reibkörper die zu geringe Bruchdehnung. Für viele Anwendungen, insbesondere wenn die Erwärmung auf der Reibfläche ungleichmäßig ist, also sog. Hot Spots auftreten, werden deshalb Legierungen aus Grauguß mit Kugelgraphit bzw. Stahlguß oder, in selteneren Fällen, Vergütungsstähle eingesetzt. Damit kann der weitere Nachteil, die relativ hohe Korrosionsanfälligkeit des Werkstoffs, jedoch nicht positiv beeinflußt werden. Schließlich sind die hohe Dichte der aus dem beschriebenen Werkstoff hergestellten Reibkörper, der schnelle Abrieb, der sich insbesondere beim Abbremsen großer Massen, wie LKWs oder Schienenfahrzeuge, bemerkbar macht, und Kosten für teure Legierungselemente als zusätzliche Nachteile zu erwähnen.

Für die Verbesserung der Eigenschaften heutiger Reibkörperwerkstoffe auf Fe-Basis können mehrere Ansätze verfolgt werden. Um die Korrosionseigenschaften zu verbessern, kommen Legierungselemente in Frage. Teure Legierungselemente erhöhen allerdings die Materialkosten unzulässig. Gewichtserspamis kann primär mit einer leichteren Legierung erreicht werden. Wird Aluminium als Basiswerkstoff eingesetzt, verbessert sich zwar das Korrosionsverhalten, die Verschließeigenschaften verschlechtern sich aber drastisch und die Einsatztemperatur ist begrenzt.

Alle aufgeführten Nachteile resultieren im wesentlichen aus dem Gefüge des Werkstoffs, da die Matrix aus einem Mischkristall auf der Basis von Fe-C besteht, der häufig ferritisch oder perlitisch oder martensitisch ist. Charakteristisch für derartige Mischkristalle ist die ungeordnete Anordnung der Metallatome. Fast ausschließlich liegt der metallische Bindungstyp zwischen ihnen vor. Als gute Alternative bieten sich dagegen Legierungen mit intermetallischen Verbindungen an. Intermetallische Verbindungen haben geordnete Kristallgitter mit einem hohen Anteil an Bindungen des ionischen oder kovalenten Typs. Sie haben, obwohl sie nur aus metallischen Elementen bestehen, Eigenschaften von Oxid-, Karbid- oder Nitridkeramiken, zeichnen sich durch hohe Schmelztemperaturen aus und eine sehr gute Korrosionsbeständigkeit. Es schien deshalb denkbar, daß durch Verwendung einer intermetallischen Verbindung die Eigenschaften von Reibkörpern wesentlich verbessert werden könnten. In Frage kamen dabei vor allem, wegen der auch gewünschten Gewichtsreduzierung, intermetallische Verbindungen auf der Basis von Eisen und Aluminium.

Gußwerkstoffe aus der ternären Gruppe Eisen-/Aluminium-/Kohlenstoff sind generell bekannt, z.B. aus der EP-069 5811 (Anmelderin: Toyota). Gegenüber Eisen/Aluminium- Verbindungen bestanden jedoch grundsätzlich, unabhängig von zusätzlichen Legierungselementen, erhebliche Vorbehalte, da sie allgemein als schwierig herstellbar, spröde und schwer bearbeitbar eingeschätzt wurden. Hierzu sei z.B. verwiesen auf die Mitteilungen der Zentrale für Gußverwendung, Blatt Nr. 1105/1 (erschienen in 9. Aufl. 1968), die auch noch den heutigen Stand der Technik wiedergibt. Aluminiumlegierte Gußeisen mit niedrigem Aluminiumgehalt (4 bis 7 % Al) werden darin mit geringer Schlagbiegefestigkeit und geringer Bearbeitbarkeit qualifiziert, solche mit hohem Aluminiumgehalt von 22 bis 30 % Al ebenfalls mit geringer Schlagbiegefestigkeit und sogar schlechter Bearbeitbarkeit. Als Anwendungsbeispiele sind Teile für Öfen, für Apparaturen zur Schwefeldestillation und zur Herstellung von Natriumsulfid, Schmelztiegel, Heizplatten und Widerstandspakete erwähnt, jedoch keinerlei mechanisch belastete Konstruktionsbauteile. An mehreren Stellen der Veröffentlichung ist darauf hingewiesen, daß zwar eine gute Zunderfestigkeit bestehe, Nachteile seien jedoch die schwierige Herstellung, die häufig

Im Gegenteil hat sich bei den der Erfindung zugrundeliegenden Versuchen jedoch entsprechend dem Ergebnis theoretischer Vorüberlegungen gezeigt, daß diese Nachteile nicht eintreten. Es wurde eine erheblich höhere Korrosionsbeständigkeit beobachtet. Die Schlagbiegefestigkeit entsprach mindestens der herkömmlicher Werkstoffe, die Bearbeitbarkeit war eher verbessert.

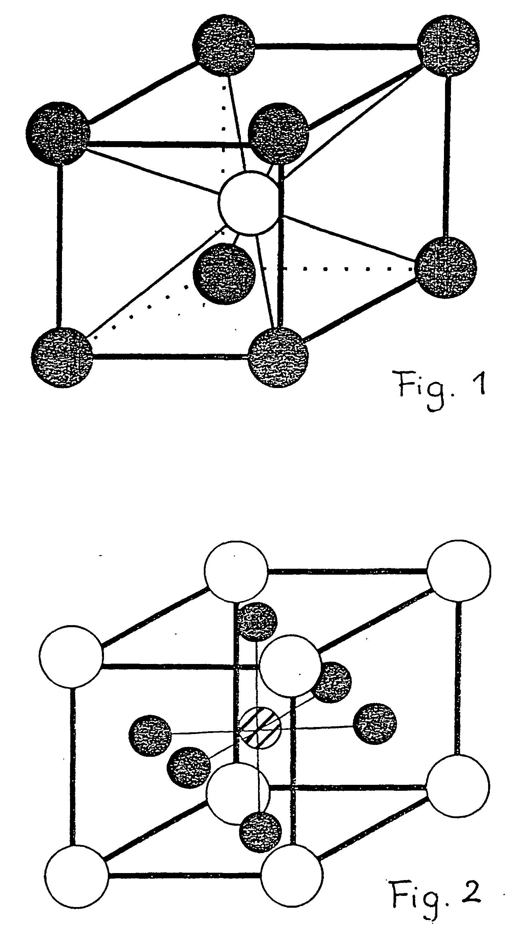

Wesentlich für die Eigenschaften des gesuchten Stoffes, der die gestellte Aufgabe lösen soll, ist das Vorhandensein lamellar ausgebildeten Kohlenstoffs in möglichst gleichmäßiger und feiner Ausbildung. Die in der Eisen-Kohlenstoff-Metallurgie dazu üblichen Verfahren lassen sich im Eisen-Aluminium-System nicht anwenden. Insbesondere die Zugabe von Silizium in größerem Umfang ist unerwünscht, da Silizium im Kristallgitter der intermetallischen Phase Positionen einnimmt, die mit Aluminium besetzt werden müßten. Es wurde deshalb gezielt untersucht, ob sich etwa die Ausscheidung des Kohlenstoffs durch die Variation des Mischungsverhältnisses von Eisen und Aluminium beeinflussen läßt. Zu entsprechenden Überlegungen hatte die Betrachtung der Metallgitterstrukturen der binären und ternären Systeme Fe-Al bzw. Fe-Al-C geführt, die in Fig. 1 und 2 dargestellt sind. Darin sind die Gitterplätze der Eisenatome schwarz, die der Aluminiumatome als offener Kreis ausgeführt. Der schraffierte Kreis in Fig. 2 zeigt die Position des Kohlenstoffs.

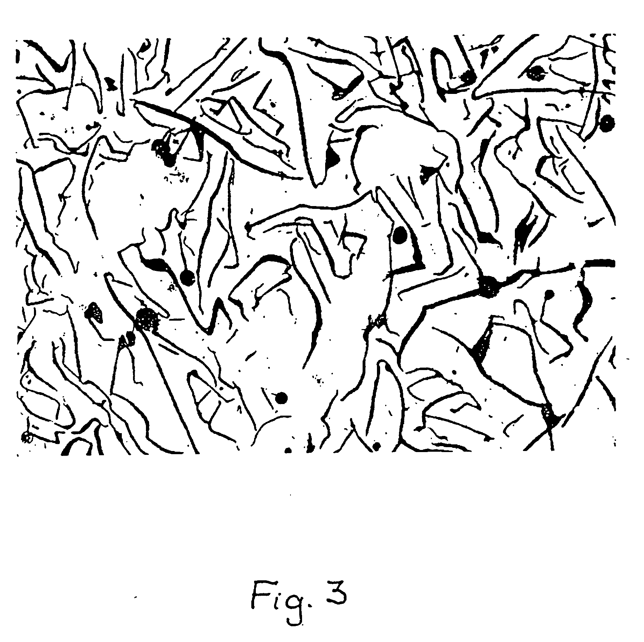

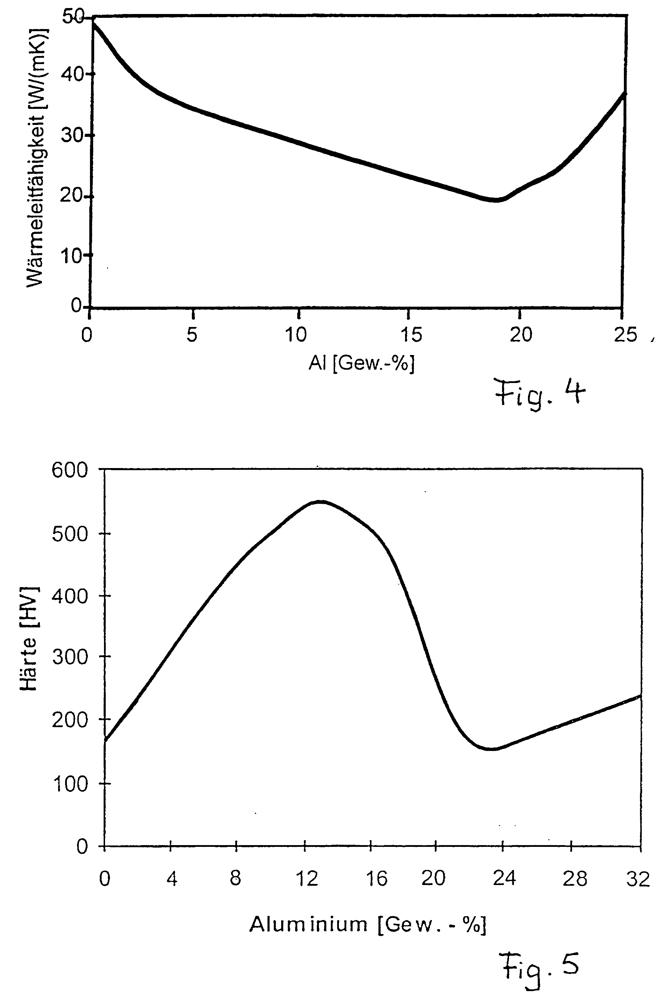

Die angestellten Versuche ergaben folgende wesentliche Veränderungen der Stoffstruktur: Bei einem Legierungsanteil von bis zu 4 Gew-% Aluminium verhält sich der erzeugte Stoff bezüglich der Kohlenstoff-Ausscheidung etwa wie Gußeisen, d. h., es bedarf der gezielten Zugabe von Silizium, um feinlamellaren Graphit zu erhalten. Mit steigendem Gewichtsanteil von Aluminium bildet sich Karbid als Perowskit-Kristall, kubisch flächenzentriert mit dem Kohlenstoffatom im Raumzentrum der Elementarzelle. Vgl. hierzu Fig. 2. Ab etwa 17 Gew-% Aluminium-Anteil wird die Kristallstruktur durch Aluminium so dicht gefüllt, daß die Einlagerung von Kohlenstoff zunehmend zurückgeht, damit also auch der Karbid-Anteil abnimmt und freier Kohlenstoff ausgeschieden wird. Bei mäßiger Anwesenheit von Silizium (bis zu 1 Gew-%) bildet sich der Kohlenstoff lamellar aus. Schließlich entsteht bei etwa 24 Gew-% Aluminium-Anteil die für den gewünschten Zweck optimale Struktur, in der durch die Verkleinerung der Oktoederlücke die in das Gitter eingelagerten Kohlenstoffatome ausgeschieden werden. Eine Darstellung des erhaltenen Gefüges zeigt Fig. 3, in der die weißen Bereiche aus FeAl gemäß Fig. 1 bestehen und der elementare Kohlenstoff (schwarz) aus Fig. 2 ausgeschieden ist. Der so geschaffene Stoff, im folgenden als FELAMCAL bezeichnet, hat alle gewünschten Vorteile bezüglich Wärmeleitfähigkeit, Schmierung, Freiheit von Brandrissen, Duktilität bei Raumtemperatur, Zerspanbarkeit und Korrosionsbeständigkeit sowie leichteren Gewichtes. Für die Wärmeleitfähigkeit der Eisen-Aluminiumlegierung und ihren Härteverlauf finden sich die festgestellten Werte in den Fig. 4 und 5. Fig. 4 ist die Darstellung der Wärmeleitfähigkeit als Funktion des Aluminiumgehalts, Fig. 5 die des Härteverlaufs.

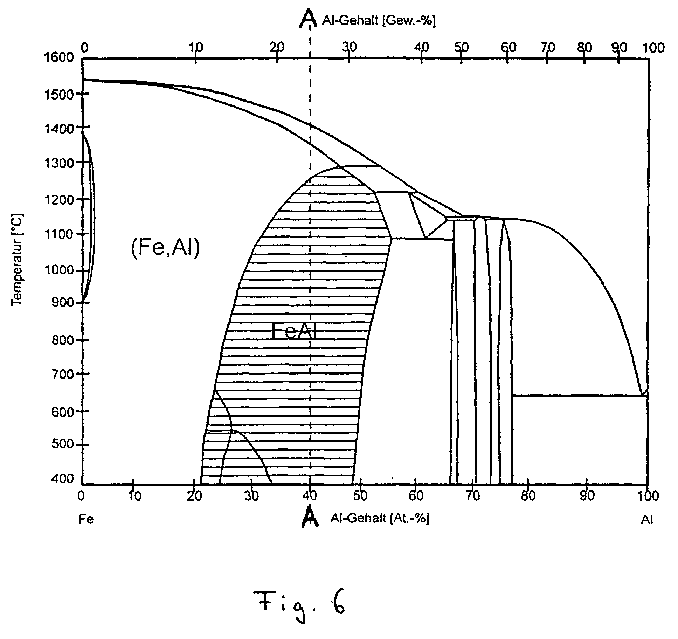

Zur näheren Erläuterung der metallurgischen Zusammenhänge, die den entwickelten Stoffqualitäten zugrundeliegen, sei zusätzlich auf Fig. 6 (Darstellung des binären Systems Eisen-Aluminium) verwiesen. Die senkrechte Linie A-A bei 24 Gew-% bzw. 40 At.-% Aluminium weist auf den Entstehungsbereich von FELAMCAL.

Ein Herstellverfahren von Reibkörpem aus FELAMCAL sei im folgenden beispielhaft für die Legierung mit 24 Gew-% Aluminium beschrieben:

Der Eisenanteil der Schmelze wird entweder aus Roheisen, niedrig legierten Stahlschrotten oder Kreislaufmaterial aus Grauguß mit Lamellengraphit oder Grauguß mit Kugelgraphit erschmolzen. Die Erschmelzung erfolgt entweder im Kupolofen oder im Elektroofen offen an Luft. Bei der Auswahl des Ausgangsmaterials ist ein geringer Kupfergehalt von unter 0,5 % zu beachten. Der Aluminiumanteil der Schmelze wird entweder aus Hüttenaluminium oder aus Aluminiumschrotten erhalten, wobei auf geringe Siliziumgehalte von max. 1 % zu achten ist. Die Legierung erfolgt in einem sauer zugestellten Ofen durch die Zugabe festen Aluminiums in flüssiges Gußeisen. Dadurch wird eine unerwünschte Sauerstoffaufnahme wirkungsvoll vermieden. Während der Legierungsbildung tritt eine exotherme Reaktion auf.

Die Schmelze wird auf 1.600°C aufgeheizt, hat vor dem Abguß eine Temperatur von etwa 1.540°C und wird unter der Schlacke hervor abgegossen. Es ergibt sich ein homogenes Fließen und eine völlige Füllung der nach üblichem Herstellverfahren gefertigten Sandformen. Die Abkühlung erfolgt ebenfalls im herkömmlichen Verfahren ohne besondere Maßnahmen, wie etwa Verringerung oder Erhöhung der Abkühlungsgeschwindigkeit oder dgl. Auch ein völliger Luftabschluß ist nicht erforderlich. Das Verfahren kann infolgedessen mit nur geringen zusätzlichen Maßnahmen in der herkömmlichen Gießerei angewendet werden.

Weiter verfolgte Überlegungen bezüglich anderer intermetallischer Verbindungen führten zu keinen günstigeren Ergebnissen. Es ist zwar theoretisch denkbar, intermetallische Verbindungen auf der Basis Eisen-Kupfer bzw. Eisen-Nickel zu erzeugen. Sie scheiden jedoch aus der weiteren Betrachtung vor allem wegen ihrer Verfahrensnachteile (Gefährdung des Personals durch Giftstoffe) bzw. ihrer hohen Kosten aus. Auch wäre mit ihnen die gewünschte Gewichtsreduzierung nicht zu erzielen.

Bei Anwendung entsprechender bekannter metallurgischer Verfahren zur Beeinflussung der Form, in der der überschüssige Kohlenstoff in der Legierung ausgeschieden wird (z. B. Zulegierung von Magnesium), ist es auch denkbar, intermetallische Verbindungen des Systems Eisen-Aluminium-Kohlenstoff mit kugelförmigen (Sphäroguß) oder vermikularem Kohlenstoff zu erzeugen. Die Anwendungsbereiche derart erzeugter Körper liegen z. B. bei Maschinenbauteilen für Motorgehäuse, Turbinen und chemischen Apparaten.

Es hat sich weiter ergeben, daß FELAMCAL sich, wie Gußeisenwerkstoffe, dazu eignet, zur weiteren Verbesserung der Verschleißfestigkeit bzw. zur Anpassung des Kaltreibwertes gezielt mit Karbiden oder Oxiden versehen zu werden. Wie bekannt werden hierzu Karbidbildner wie Molybdän, Chrom, Hafnium, Titan oder Tantal bzw. Oxide von Erbium oder Zirkon, jeweils mit Anteilen von unter 5 Gew-%, zulegiert.

Die nach dem beschriebenen Verfahren erzielte Schmelze hat eine höhere Viskosität als konventionelle hochgekohlte Gußeisen, wie sie vorzugsweise für die Reibkörperfertigung verwendet werden. Deshalb sind vergrößerte Anschnittsquerschnitte in der Gießform erforderlich. Als besonders vorteilhaft hat sich der zentrale Einguß je Reibkörper aus dem Oberlauf der Form erwiesen.

FELAMCAL wurde, wie dargestellt, bevorzugt als verbessertes Substitutiv bekannter Reibwerkstoffe entwickelt. Es leuchtet ein, daß die Verwendung des Stoffes auf derartige Erzeugnisse nicht beschränkt ist. Er kann überall dort verwendet werden, wo es auf die dargestellten Eigenschaften ankommt, da er als leicht verarbeitbarer Gußwerkstoff auch ohne wesentliche zusätzliche Einrichtungen oder Verfahrensschritte erzeugt werden kann und günstige Herstellkosten aufweist.

Als Herstellverfahren für FELAMCAL können natürlich auch andere Abläufe gewählt werden, etwa das gemeinsame Erschmelzen der in fester Form vorliegenden Ausgangsmetalle oder sonstige Verfahren, die dem Gießereifachmann herkömmlicherweise bekannt sind.

## Patentansprüche

1. Metallischer Gußwerkstoff für Reibkörper zur Kraftübertragung in Beschleunigungs- und Verzögerungseinrichtungen, insbesondere in Brems- oder Kupplungssystemen von Straßen- oder Schienenfahrzeugen, aus einer Legierung der ternären Gruppe Eisen-Aluminium-Kohlenstoff,
**dadurch gekennzeichnet, daß**
die Legierung sich überwiegend in der intermetallischen Phase mit geordneter Kristallgitterstruktur befindet und freier Kohlenstoff in lamellarer Form vorliegt, und der Werkstoff neben Eisen 20 bis 28 Gewichts-Prozent Aluminium, bis zu 1 Gewichts-Prozent Silizium und bis zu 3 Gewichts-Prozent Kohlenstoff aufweist.

2. Metallischer Gußwerkstoff nach Anspruch 1,
**dadurch gekennzeichnet, daß**
der freie Kohlenstoff in kugeliger Form vorliegt.

3. Metallischer Gußwerkstoff nach Anspruch 1,
**dadurch gekennzeichnet, daß**
der freie Kohlenstoff in vermikularer Form vorliegt.

4. Metallischer Gußwerkstoff nach einem oder mehreren der Ansprüche 1 bis 3,
**dadurch gekennzeichnet, daß**
dem Werkstoff karbidbildende Elemente, wie Molybdän, Chrom, Hafnium, Titan oder Tantal mit unter 5 Gewichts-Prozent-Anteil zulegiert sind.

5. Metallischer Gußwerkstoff nach einem oder mehreren der Ansprüche 1 bis 3,
**dadurch gekennzeichnet, daß**
dem Werkstoff oxidbildende Elemente, wie Erbium oder Zirkon mit unter 5 Gewichts-Prozent-Anteil zulegiert sind.

6. Metallischer Gußwerkstoff nach einem oder mehreren der Ansprüche 1 bis 3,
**dadurch gekennzeichnet, daß**
dem Werkstoff Oxide Seltener Erden mit unter 5 Gewichts-Prozent-Anteil zulegiert sind.

7. Reibkörper zur Momentenübertragung in Beschleunigungs- oder Verzögerungseinrichtungen, insbesondere in Brems- oder Kupplungssystemen von Straßen- oder Schienenfahrzeugen, aus einem Gußwerkstoff,
**dadurch gekennzeichnet, daß**
der Gußwerkstoff eine Legierung gemäß einem oder mehreren der Ansprüche 1 bis 5 ist.

8. Reibkörper zur Momentenübertragung in Beschleunigungs- oder Verzögerungseinrichtungen, insbesondere in Brems- oder Kupplungssystemen von Straßen- oder Schienenfahrzeugen, aus einem metallischem oder keramischen Werkstoff, auf den eine Reibschicht durch thermisches Spritzen, Walzen, Reibschweißen oder in vergleichbarer Weise aufgebracht ist,
**dadurch gekennzeichnet, daß**
die Reibschicht eine Legierung gemäß einem oder mehreren der Ansprüche 1 bis 5 ist.

9. Reibkörper nach Anspruch 6 oder 7,
**dadurch gekennzeichnet,**
**daß** der Reibkörper eine Bremsscheibe ist.

10. Reibkörper nach Anspruch 6 oder 7,
**dadurch gekennzeichnet,**
**daß** der Reibkörper eine Bremstrommel ist.

11. Reibkörper nach Anspruch 8,
**dadurch gekennzeichnet,**
**daß** die Bremsscheibe innenbelüftet ist.

12. Verfahren zur Herstellung eines metallischen Gußwerkstoffs gemäß Anspruch 1 für Reibkörper zur Kraftübertragung in Beschleunigungs- oder Verzögerungseinnchtungen. insbesondere in Brems- oder Kupplungssystemen von Straßen- oder Schienenfahrzeugen,
**dadurch gekennzeichnet daß**
das Aluminium dem flüssigen Eisen in fester Form zugegeben wird.

13. Verfahren nach Anspruch 8,
**dadurch gekennzeichnet, daß**
das Erschmelzen und Vergießen des Werkstoffs offen unter Luft erfolgt.

14. Verfahren nach Anspruch 8,
**dadurch gekennzeichnet, daß**
das Erschmelzen des Werkstoffs im sauer zugestellten Ofen erfolgt.

## Claims

1. Metallic casting material for friction members for the transmission of power in acceleration and deceleration devices, particularly In braking or coupling systems of road or rail vehicles, from an alloy of the ternary group iron-aluminium-carbon,
**characterised in that**
the alloy is predominantly in the intermediate phase with an ordered crystal lattice structure and free carbon is present in lamellar form, and, apart from iron, the material has 20 to 28 weight per cent aluminium, up to 1 weight per cent silicon and up to 3 weight per cent carbon.

2. Metallic casting material according to claim 1,
**characterised in that**
he free carbon is present in spherical form.

3. Metallic casting material according to claim 1,
**characterised in that**
the free carbon is present in vermicular form.

4. Metallic casting material according to one or more of claims 1 to 3,
**characterised in that**
the material is alloyed with carbide forming elements such as molybdenum, chromium, hafnium, titanium or tantalum in a proportion of under 5 weight per cent.

5. Metallic casting material according to one or more of claims 1 to 3,
**characterised in that**
the material is alloyed with oxide forming elements such as erbium or zirconium in a proportion of under 5 weight per cent.

6. Metallic casting material according to one or more of claims 1 to 3,
**characterised in that**
the material is alloyed with oxides of rare earths in a proportion of under 5 weight per
cent.

7. Friction member for the transmission of power in acceleration or deceleration devices, particularly in braking or coupling systems of road or rail vehicles, from a casting material,
**characterised in that**
the casting material is an alloy according to one or more of claims 1 to 5.

8. Friction member for the transmission of power in acceleration or deceleration devices, particularly in braking or coupling systems of road or rail vehicles, from a metallic or ceramic material to which a friction layer is applied by thermal spraying, rolling, friction welding or in a comparable way,
**characterised in that**
the friction layer is an alloy according to one or more of claims 1 to 5.

9. Friction member according to claim 6 or 7,
**characterised in that**
the friction member is a brake disc.

10. Friction member according to claim 6 or 7,
**characterised in that**
the friction member is a brake drum.

11. Friction member according to claim 8,
**characterised in that**
the brake disc is internally ventilated.

12. Process for the production of a metallic casting material according to claim 1 for friction members for the transmission of power in acceleration or deceleration devices, particularly in braking or coupling systems of road or rail vehicles,
**characterised in that** the solid aluminium is added to the liquid iron in solid form.

13. Process according to claim 8,
**characterised in that**
the melting and pouring of the material takes place openly under air.

14. Process according to claim 8,
**characterised in that**
the melting of the material takes place in an acid-lined furnace.

## Revendications

1. Matériau de moulage métallique pour corps de friction destinße à la transmission de puissance dans des dispositifs d'accélération et de décélération, en particulier dans des systèmes de freinage ou d'embrayage de véhicules routiers ou sur rails, en alliage du groupe ternaire fer - aluminium - carbone,
**caractérisé**∼ de la manière suivante,
que l'alliage se trouve pour la majeure partie dans la phase intermétallique avec structure cristalline ordonnée et que le carbone libre soit sous forme lamellaire, et que le matériau présente, en dehors du fer, un pourcentage en poids de 20 à 28 d'aluminium, un pourcentage en poids pouvant atteindre 1 de silicium et un pourcentage en poids pouvant atteindre 3 de carbone.

2. Matériau de moulage métallique selon la spécification 1,
**caractérisé** de la manière suivante,
que le carbone libre soit sous forme sphéroïdale.

3. Matériau de moulage métallique selon la spécification 1,
**caractérisé** de la manière suivante,
que le carbone libre soit sous forme vermiculaire.

4. Matériau de moulage métallique selon la spécification 1 à 3,
**caractérisé** de la manière suivante,
que les éléments formateurs de carbure, tels que le molybdène, le chrome, le hafnium, le titane ou le tantale soient ajoutés par alliage au matériau avec une teneur de pourcentage en poids inférieure à 5.

5. Matériau de moulage métallique selon une ou plusieurs des spécifications 1 à 3,
**caractérisé** de la manière suivante,
que les éléments formateurs d'oxyde tels que l'erbium ou le zircon soient ajoutés par alliage au matériau avec une teneur de pourcentage en poids inférieure à 5.

6. Matériau de moulage métallique selon une ou plusieurs des spécifications 1 à 3,
**caractérisé** de la manière suivante,
que les oxydes de terres rares soient ajoutés par alliage au matériau avec une teneur de pourcentage en poids inférieure à 5.

7. Corps de friction destiné à la transmission de puissance dans des dispositifs d'accélération et de décélération, en particulier dans des systèmes de freinage ou d'embrayage de véhicules rouliers ou sur rails, en matériau de moulage métallique,
**caractérisé** de la manière suivante,
que le matériau de moulage métallique soit un alliage selon une ou plusieurs des spécifications 1 à 5.

8. Corps de friction destiné à la transmission de puissance dans des dispositifs d'accélération et de décélération, en particulier dans des systèmes de freinage ou d'embrayage de véhicules routiers ou sur rails, en matériau métallique ou céramique sur lequel est appliquée une couche de friction par projection thermique, laminage, soudage par friction ou par un procédé comparable,
**caractérisé** de la manière suivante,
que la couche de friction soit un alliage selon une ou plusieurs des spécifications 1 à 5.

9. Corps de friction selon la spécification 6 ou 7,
**caractérisé** de la manière suivante,
que le corps de friction soit un disque de frein.

10. Corps de friction selon la spécification 6 ou 7,
**caractérisé** de la manière suivante,
que le corps de friction soit un tambour de frein.

11. Corps de friction selon la spécification 8,
**caractérisé** de la manière suivante,
que le disque de frein soit ventilé intérieurement.

12. Procédé de fabrication d'un matériau de moulage métallique selon la spécification 1 pour corps de friction destiné à la transmission de puissance dans des dispositifs d'accélération et de décélération, en particulier dans des systèmes de freinage ou d'embrayage de véhicules routiers ou sur rails,
**caractérisé** de la manière suivante,
que l'aluminium soit ajouté sous forme solide à l'acier fondu.

13. Procédé selon la spécification 8,
**caractérisé** de la manière suivante,
que l'élaboration et la coulée du matériau se fasse de façon libre à l'air.

14. Procédé selon la spécification 8,
**caractérisé** de la manière suivante,
que l'élaboration du matériau se fasse dans un four à garnissage acide fourni.
